# EUROPÄISCHE PATENTSCHRIFT

(11) **EP 3 391 168 B1**
(45) Veröffentlichungstag und Bekanntmachung des Hinweises auf die Patenterteilung: **21.04.2021**
(21) Anmeldenummer: 16831485.4
(22) Anmeldetag: 16.11.2016
(51) Int. Cl.: G05D 1/02, B60P 1/02, B62D 55/06, B60P 3/40, B62D 61/10, B62D 63/02, B62D 12/02

(54) **TRANSPORTSYSTEM UND VERFAHREN ZUM BETREIBEN EINES TRANSPORTSYSTEMS**
TRANSPORT SYSTEM AND METHOD FOR OPERATING A TRANSPORT SYSTEM
SYSTÈME DE TRANSPORT ET PROCÉDÉ DE FONCTIONNEMENT D'UN SYSTÈME DE TRANSPORT

(30) Priorität: 18.12.2015 DE 102015016396
(43) Veröffentlichungstag der Anmeldung: 24.10.2018
(73) Patentinhaber: SEW-EURODRIVE GmbH & Co. KG, 76646 Bruchsal (DE)
(72) Erfinder: SCHMIDT, Josef, 76676 Graben-Neudorf (DE); SLISKOVIC, Maja, 76275 Etttlingen (DE); ANGST, Michael, 76131 Karlsruhe (DE); BOCKELMANN, Gero, 76646 Bruchsal (DE)
(86) Internationale Anmeldenummer: PCT/EP2016/025147
(87) Internationale Veröffentlichungsnummer: WO 2017/102092

(56) Entgegenhaltungen:
- WO-A2-2009/040777
- US-A1- 2011 133 419
- US-A1- 2013 015 631
- US-A1- 2015 125 252

## Beschreibung

Die Erfindung betrifft ein Transportsystem und ein Verfahren zum Betreiben eines Transportsystems.

Aus der DE 10 2014 010 915 A1 ist eine Förderanlage mit bewegbarem Teil, auf dem Bussegmente aneinandergereiht sind, welche jeweils einen Master und Slaves in Linien-Topologie aufweisen, bekannt, wobei der Master des jeweils benachbarten Bussegments auch Teilnehmer ist im anderen Bussegment. Zwischen dem stationären Teil und den Mastern ist eine berührungslose Datenübertragung vorhanden.

Aus der DE 10 2014 016 900 A1 ist ein Fördersystem zum Fördern von Gegenständen sowie Steuerungsverfahren hierfür bekannt.

Aus der DE 10 2007 046 868 A1 ist eine Transportvorrichtung für Ladungsträger und ein Verfahren zu deren Steuerung bekannt.

Aus der US 2015/125252 A1 ist als nächstliegender Stand der Technik ein Transportsystem bekannt, wobei Mobilteile mit Panzerantrieb, also nicht lenkbaren Rädern, vorgesehen sind. Diese Mobilteile erhalten auch bei gemeinschaftlichen Transporten von einer zentralen Steuerung jeweils Fahrbefehle.

Aus der US 2011/133419 A1 ist ein Ladungstransportsystem bekannt.

Aus der US 2013/015631 A1 ist ein Plattformsystem zum Transport eines Langrohrs mittels zweier Mobilteile bekannt.

Aus der WO 2009/040777 A2 ist eine kollaborative Robotergruppe bekannt.

Der Erfindung liegt daher die Aufgabe zugrunde, einen effektiven intralogistischen Transport weiterzubilden, wobei insbesondere übergroße Behälter transportierbar sein sollen.

Erfindungsgemäß wird die Aufgabe bei dem Transportsystem nach den in Anspruch 1 angegebenen Merkmalen gelöst.

Wichtige Merkmale bei dem Verfahren zum Betreiben eines Transportsystems sind, dass eines der Mobilteile als Master und das andere als Slave fungiert,
wobei im als Master fungierenden Mobilteil das jeweils aktuell notwendige Drehmoment bestimmt wird,
wobei ein erster Anteil dieses Drehmoments als Sollwert für eine im als Master fungierenden Mobilteil angeordnete Drehmomentenregelung verwendet wird, so dass das vom Antrieb des als Master fungierenden Mobilteils erzeugte Drehmoment auf diesen Sollwert hin geregelt wird,
wobei der restliche Anteil des jeweils aktuell als notwendig bestimmten Drehmoments als Sollwert für eine im als Slave fungierenden Mobilteil angeordnete Drehmomentenregelung verwendet wird, so dass das vom Antrieb des als Slave fungierenden Mobilteils erzeugte Drehmoment auf diesen Sollwert hin geregelt wird.

Von Vorteil ist dabei, dass eine Verbundfahrt kraftgeregelt ausführbar ist. Somit verbleibt das Transportgestell in seiner Relativposition unverändert zum jeweiligen Mobilteil, solange die zur Verfahrfläche tangential gerichteten Antriebskräfte betragsmäßig kleiner als die Haftreibungskraft des Transportgestellt an seiner Berührfläche mit den Linearachsen der Mobilteile sind. Die durch bloße Haftreibung erzeugte Kraft ist durch formschlüssiges Verbinden vergrößerbar, also beispielsweise Vertiefungen am Transportgestell, in welche Erhebungen der Linearachsen eingreifen.

Das aktuell notwendige Drehmoment ergibt sich aus dem Fahrdiagramm. Wenn beispielsweise eine Geschwindigkeit innerhalb einer gewissen Zeitspanne erhöht werden soll, ist hierzu eine Beschleunigung entlang des Fahrwegs notwendig, welche einem Drehmoment des Antriebs entspricht.

Von Vorteil ist bei der Erfindung, dass in einer Anlage eine Verbundfahrt ausführbar ist, also ein Transportgestell transportierbar ist, welche mit einem einzigen Mobilteil nicht transportierbar wäre. Hierzu darf das Transportgestell länger sein als das Mobilteil, insbesondere als das Doppelte der Länge der Mobilteile, insbesondere in Fahrtrichtung gemessen. Dabei ist der Kommunikationskanal geschützt unter dem Transportgestell anordenbar. Außerdem sind die Mobilteile in Master-Slave-Regelung regelbar. Somit sind die Bewegungen des als Slave fungierenden Mobilteils in Abhängigkeit von dem als Master fungierenden Mobilteil ausführbar. Die Mobilteile sind auch separat einzeln, also unabhängig voneinander betreibbar, wenn keine Verbundfahrt ausgeführt werden soll. Dann können die Mobilteile jedoch nur kleine Lasten oder keine Lasten transportieren.

Mittels der Lagerrollen ist das Transportgestell von Hand verschiebbar, also ohne motorischen Antrieb der Mobilteile.

Weitere Vorteile ergeben sich aus den Unteransprüchen.

Die Erfindung wird nun anhand von Abbildungen näher erläutert:

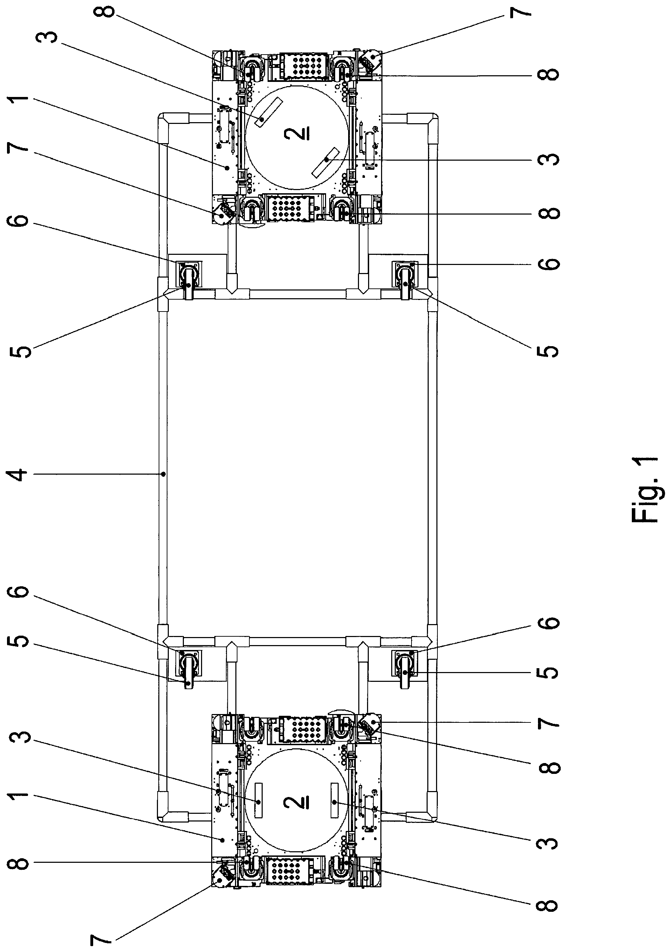

In der Figur 1 ist ein erfindungsgemäßes Transportsystem in Ansicht von unten dargestellt, wobei das Transportsystem aus zwei Mobilteilen 1 und einem Transportgestell 4, an dem Rollenlagereinheiten 6 mit Rollen 5 befestigt sind.

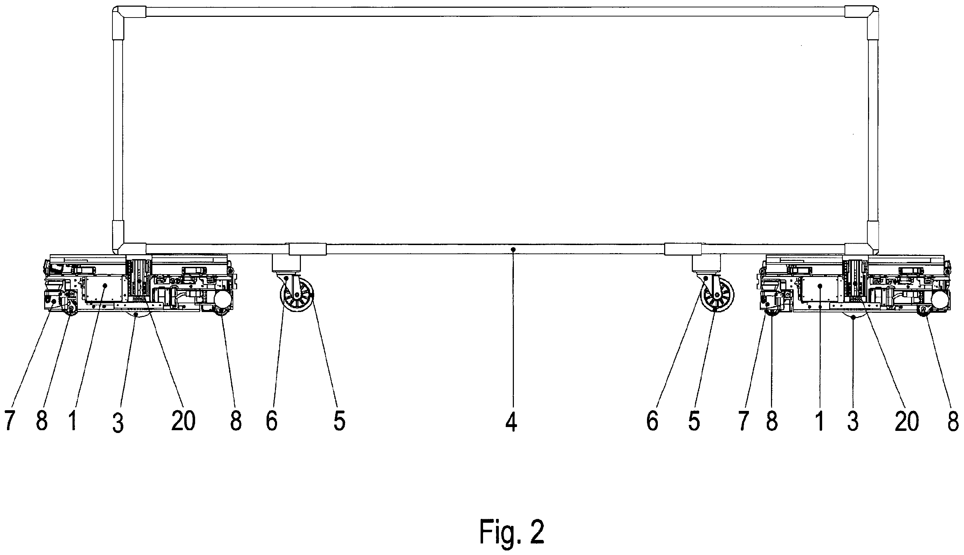

In der Figur 2 ist eine zugehörige Seitenansicht dargestellt.

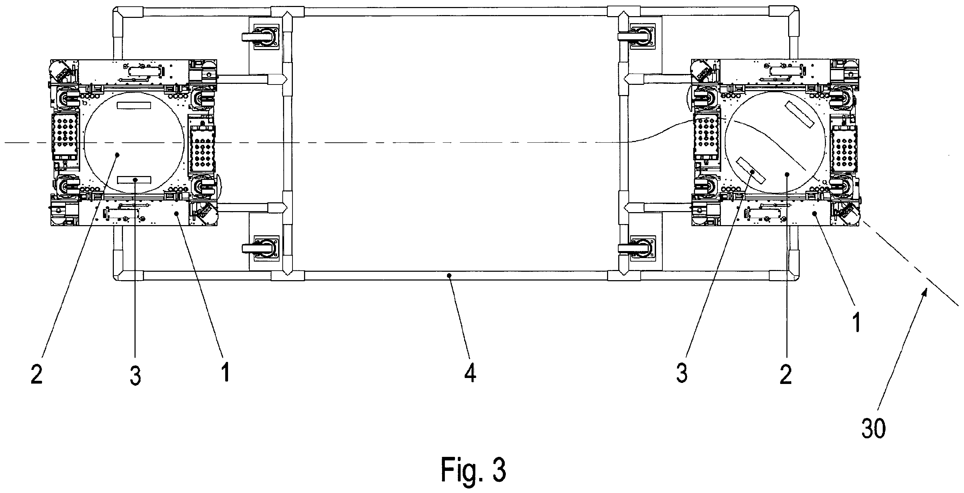

In der Figur 3 ist eine Bahnkurve 30 dargestellt, die durchfahrbar ist, wenn das erste Mobilteil 1 lenkbare Antriebsräder aufweist und das zweite Mobilteil 1 Antriebsräder mit festgelegter Ausrichtung.

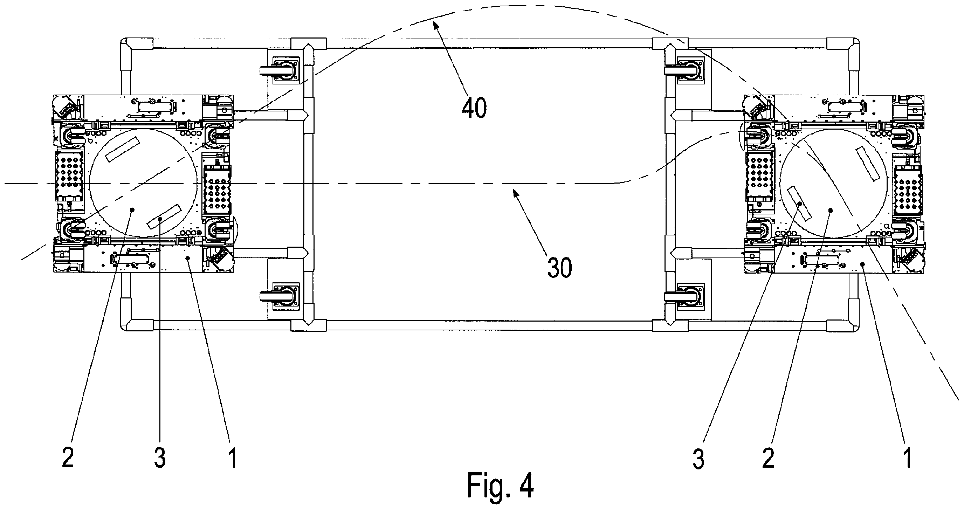

In der Figur 4 ist eine Bahnkurve 40 dargestellt, die durchfahrbar ist, wenn das erste Mobilteil 1 lenkbare Antriebsräder aufweist und das zweite Mobilteil 1 ebenfalls lenkbare Antriebsräder aufweist.

Wie in den Figuren dargestellt, weist das Transportgestell 4 vorzugsweise vier Lenkrollen auf, die jeweils eine in einer Rollenlagereinheit 6 drehbar gelagerte Rolle 5 aufweisen, wobei die Rollenlagereinheit drehbar gelagert ist um eine vertikal gerichtete Drehachse. Die Rolle 5 ist drehbar gelagert um eine horizontal ausgerichtete Drehachse, welche stets senkrecht zur vertikal verrichteten Drehachse der Rollenlagereinheit ausgerichtet ist.

Somit ist das Transportgestell 4 bei nicht vorhandenen Mobilteilen 1 auf einem Boden, insbesondere also Verfahrfläche, verfahrbar.

Zur Aufnahme des Transportgestells 4 wird dieses von zwei Mobilteilen 1 unterfahren, wobei die Lenkrollen zwischen den Mobilteilen 1 angeordnet sind. Danach werden die auf den Mobilteilen 1 jeweils als Linearantrieb ausgeführten Hubachsen 20 ausgefahren und somit das Transportgestell 4 angehoben. Somit verlieren dann die Lenkrollen den Bodenkontakt, also die Berührung mit der Verfahrfläche.

Die beiden Mobilteile 1 werden nach dieser Aufnahme des Transportgestells 4 in Master-Slave-Regelung betrieben, also in gegenseitiger Abhängigkeit. Dies bedeutet, dass das als Master fungierende Mobilteil 1 entlang einer Bahnkurve 30 oder 40 verfahren wird und dabei aus der jeweils aktuellen Istposition des als Master fungierenden Mobilteils 1 eine Sollposition für das als Slave fungierenden Mobilteils 1 bestimmt wird und übermittelt wird an das als Slave fungierende Mobilteil 1, dessen Antrieb dieses als Slave fungierende Mobilteil 1 auf die Sollposition hinsteuert oder regelt.

Die von einem Elektromotor angetriebenen Räder 3 des Mobilteils 1 sind jeweils auf einer Welle angeordnet, deren Achse horizontal ausgerichtet ist. Dabei sind jeweils zwei Räder 3 parallel zueinander ausgerichtet. Die Räder 3 beziehungsweise deren Welle werden jeweils von einem Elektromotor angetrieben, so dass unterschiedliche Drehzahlen der beiden parallel zueinander ausgerichteten, gleichgroßen Räder 3 einstellbar sind wodurch eine Lenkbewegung bewirkbar ist. Bei gleicher Drehzahl der beiden Räder 3 wird eine gerade Bahnkurve durchfahren, deren Richtung horizontal ausgerichtet ist und senkrecht zur Achse der Welle.

Die Räder 3 beziehungsweise deren Welle sind auf einer Einheit drehbar gelagert angeordnet, die als Drehteller 2 bezeichnet wird und drehbar gelagert ist am Gestell des Mobilteils 1. Der Drehteller 2 bestimmt somit den Lenkwinkel. Der Drehteller 2 wird nur mit einer definierten Kraft über die Räder 3 an die Verfahrfläche gedrückt. Die von dem aufgenommenen Transportgut oder Transportgestellt abhängige Gewichtskraft wird über Lenkrollen 8 an die Verfahrfläche abgeleitet, welche hierzu am Gestell des Mobilteils angeordnet sind. Die Lenkrollen 8 leiten also den wesentlichen Teil der Gewichtskraft des Mobilteils 1 und der von ihm aufgenommenen Last in die Verfahrfläche ab.

Die Mobilteile 1 weisen Sensoren auf, welche Hindernisse und/oder Gegenstände detektieren, sodass das Mobilteil 1 jeweils rechtzeitig abbremsbar ist. Die Sensoren sind derart seitlich an den Mobilteilen 1 angeordnet, dass bei aufgenommenem Transportgestell 4 und Ausführen der in Master-Slave-Regelung betriebenen Verbundfahrt das vordere Mobilteil 1 den Halbraum vorne und das hintere Mobilteil 1 den hinteren Halbraum überwacht. Zusätzlich ist mit dem jeweils anderen Sensor 7 auch der Zwischenraum zwischen den Mobilteilen 1 unterhalb des Transportgestells 4 überwachbar.

Dabei ist wichtig, dass ein Kommunikationskanal zwischen dem als Slave fungierenden Mobilteil 1 und dem als Master fungierenden Mobilteil 1 eingerichtet ist. Über diesen Kommunikationskanal werden nicht nur die für die Master-Slave-Regelung notwendigen Informationen übertragen, sondern auch die Signale des Sensors des als Slave fungierenden Mobilteils 1. Somit sind in der elektrischen Steuerung des als Master fungierenden Mobilteils 1 die Signale aller Sensoren der beiden Mobilteile 1 auswertbar und davon abhängig eine Warninformation anzeigbar und/oder weiterübermittelbar und/oder eine Aktion, wie Bremsen der Mobilteile 1 oder Regeln der Mobilteile 1 auf eine sichere Geschwindigkeit, ausführbar.

Der Kommunikationskanal wird vorzugsweise durch Übertragung modulierten Lichts realisiert. Hierzu sind seitlich an jedem Mobilteil Lichtsender und entsprechende für Licht sensitive Empfänger angeordnet und mit der jeweiligen Steuerung des jeweiligen Mobilteils 1 verbunden. Da der Kommunikationskanal unterhalb des Transportgestells 4 im zwischen den Mobilteilen 1 gebildeten Zwischenraum angeordnet ist, ist dieser Kommunikationskanal geschützt, beispielsweise gegen Niederschlag. Insbesondere ist auch von oben stammendes Störlicht zumindest reduziert.

Bei einem Lenkwinkel von 0° ist eine Geradeausfahrt und bei einem Lenkwinkel von 90° ist eine Querfahrt ermöglicht.

Wie oben beschrieben, werden nach anfänglichem Unterfahren des Transportgestells 4 die Hubachsen vertikal, insbesondere nach oben, ausgefahren und das Transportgestell 4 angehoben.

Dieses Verfahren der Hubachsen erfolgt ebenfalls in Master-Slave-Regelung. Hierzu werden von dem als Master fungierenden Mobilteil 1 die erfassten Istwerte der Vertikalposition dessen Hubachse 20 über den Kommunikationskanal an das als Slave fungierende Mobilteil 1 übertragen und dieser als jeweils aktueller Sollwert verwendet oder ein jeweils aktueller Sollwert daraus bestimmt. Die Vertikalposition der Hubachse 20 des als Slave fungierenden Mobilteils 1 wird auf den jeweils aktuellen Sollwert hin geregelt. Die Aktualisierung erfolgt dabei vorzugsweise in Zeitabständen von weniger als 20 Millisekunden.

Somit werden also die Informationen der für die Hubachsen-Betätigung und die zum Fahren verwendeten Master-Slave-Regelungen über denselben Kommunikationskanal übertragen. Das modulierte Licht, welches unterhalb des Transportgestells 4 zwischen den Mobilteilen 1 übertragen wird, wird also zumindest mit den für die Master-Slave-Regelungen notwendige Informationen beaufschlagt. Es werden also diese Informationen aufmoduliert. Es sind sogar zeitabschnittsweise die Hubachsen schon ausfahrbar, wenn das Unterfahren noch nicht ganz beendet ist. Somit werden ist die Fahrantriebsregelung zeitgleich mit der Hubachsenregelung betreibbar.

Bei der Verbundfahrt werden die Mobilteile 1 in Master-Slave-Regelung betrieben. Dabei werden die am Drehteller 2 angeordneten Räder 3 des ersten Mobilteils derart unterschiedlich betrieben, dass ein Lenkwinkel sich einstellt, also der Drehteller 2 relativ zum restlichen Mobilteil 1 verdreht wird. Die Räder 3 des Drehtellers 2 des anderen Mobilteils 1 werden gleichartig betrieben, so dass der Lenkwinkel verschwindend klein ist, also keine Verdrehung des Drehtellers 2 relativ zum restlichen Mobilteil 1 sich einstellt.

Somit lässt sich eine Bahnkurve 30 in Verbundfahrt durchfahren.

Wenn jedoch auch ein nicht verschwindender Lenkwinkel des zweiten Mobilteils 1 zugelassen wird, also die Räder 3 des zweiten Mobilteils derart unterschiedlich angetrieben werden, dass der Drehteller 2 sich relativ zum restlichen Mobilteil 1 verdreht, sind sogar Bahnkurve 40 durchfahrbar, wobei ein weiteres Ausschlagen der Teile des Transportsystems auftritt. Vorteiligerweise sind dabei engere Kurvenradien als bei der Bahnkurve 30, also dem Zulassen des Lenkens nur durch das erste Mobilteil 1, durchfahrbar bei gleichzeitigem Lenken beider Mobilteile 1, also auch Verdrehen der Drehteller 2.

Bei einem weiteren erfindungsgemäßen Ausführungsbeispiel ist dem als Master fungierenden Mobilteil 1 und dem als Slave fungierenden Mobilteil der Auftrag, das Transportgestell zu transportieren bekannt sowie die Startposition und Endposition. Hierfür plant das als Master fungierende Mobilteil seine eigene Bahnkurve als Soll-Bahnkurve und teilt diese dem als Slave fungierenden Mobilteil mit. Dieses berechnet seine eigene Bahnkurve unter Berücksichtigung der Länge des Transportgestells und der vom als Master fungierenden Mobilteil übermittelten Bahnkurve. Der Master teilt das für ihn vorgesehene Fahrdiagramm dem als Slave fungierenden Mobilteil mit. Das Fahrdiagramm beinhaltet den zeitlichen Verlauf der für das Abfahren der für das als Master fungierende Mobilteil vorgesehenen Bahnkurve vorgesehenen Geschwindigkeiten. Das als Slave fungierende Mobilteil 1 bestimmt daraus sein eigenes Fahrdiagramm.

Jedes Mobilteil weist ein eigenes Positionsbestimmungssystem auf, so dass jedes Mobilteil seine jeweilige Position bestimmen kann. Hierzu sind in der Umgebung Sender aufgestellt, so dass das Mobilteil 1 nach Art eines GPS Systems die Positionsbestimmung ausführt.

Jedes Mobilteil weist auch Sende- und Empfangsmittel für einen auf Funkwellen basierenden Kommunikationskanal zu einer zentralen Steuerung der das Transportsystem und die Verfahrfläche umfassenden Anlage auf, Die Anlage ist beispielsweise eine Fertigungsanlage zum Herstellen von Produkten. Mit dem Transportgestell 4 sind für die Herstellung notwendige Teile oder die Produkte in der Anlage transportierbar. Somit unterstützt die Erfindung den intralogistischen Transport der Fertigungsanlage.

Während der Verbundfahrt bestimmt das als Slave fungierende Mobilteil 1 mit Laserscannern den jeweils aktuellen Abstand und die jeweils aktuelle Ausrichtung zum als Master fungierenden Mobilteil 1.

Während der Verbundfahrt wird das jeweils aktuelle Drehmoment bestimmt und überwacht. Bei unzulässig hoher Abweichung wird eine Warnung angezeigt oder weitergeleitet und/oder ein Stoppen der Mobilteile 1 bewirkt.

Wenn von einem der Mobilteile 1 ein Hindernis detektiert wird, wird diese Information an das andere Mobilteil 1 übermittelt.

Bei einem weiteren erfindungsgemäßen Ausführungsbeispiel werden die Mobilteile anders geregelt. Hierbei wird vom ersten Mobilteil 1 ein Solldrehmoment bestimmt, das für das Abfahren der vorgegebenen Bahnkurve gemäß einem vorgegebenen Fahrdiagramm notwendig ist. Das Fahrdiagramm weist dabei einen zeitlichen Verlauf der Positionen und/oder einen zeitlichen Verlauf der Geschwindigkeit des ersten Mobilteiles 1 entlang der Bahnkurve auf. Das jeweils aktuell notwendige Drehmoment wird entsprechend dem Fahrdiagramm bestimmt. Von diesem Drehmoment wird ein erster Anteil, beispielsweise 50%, als Sollwert für eine Drehmomentregelung des ersten Mobilteils 1 verwendet und der restliche Anteil, im Beispiel 50%, als Sollwert für eine Drehmomentregelung des zweiten Mobilteils 1 verwendet. Jedes Mobilteil 1 bestimmt hierzu den jeweiligen Istwert an erzeugtem Drehmoment und regelt diesen dann auf den jeweiligen Sollwert hin. Die Drehmomentregelung kann einer anderen Regelung unterlagert sein.

Das als Master fungierende Mobilteil 1 überwacht mit seinen Sensoren die Umgebung, wobei eine Hysterese vorgesehen ist. Die dabei erfassten Werte von ersten physikalischen Größen werden also auf Überschreiten oder Unterschreiten eines Schwellwertes überwacht, wobei eine Hysterese berücksichtigt wird. Das als Master fungierende Mobilteil 1 überwacht mit seinen Sensoren dieselben Größen, überwacht also die erfassten Werte derselben Größen auf das Überschreiten oder Unterschreiten des Schwellwertes, wobei eine kleinere Hysterese berücksichtigt wird. Auf diese Weise wird sichergestellt, dass
Der Master nur eingreift, wenn der Slave nicht mehr folgen kann, beispielsweise wegen eines Fehlers.

Bei einem weiteren erfindungsgemäßen Ausführungsbeispiel werden über den Kommunikationskanal entweder die für die Master-Slave-Regelung der Hubachsen 20 notwendigen Informationen übertragen oder die für die Master- Slave-Regelung der Verbundfahrt der Mobilteile notwendigen Informationen.

### Bezugszeichenliste

- 1: Mobilteil
- 2: Drehteller
- 3: Rad
- 4: Transportgestell
- 5: Rolle
- 6: Rollenlagereinheit
- 7: Sensor
- 8: Lenkrollen
- 20: Hubachse
- 30: erste Bahnkurve
- 40: zweite Bahnkurve

## Patentansprüche

1. Verfahren zum Betreiben eines Transportsystems mit einem ersten und zweiten Mobilteil (1) sowie mit einem Transportgestell (4),
**wobei am Transportgestell (4) ein Lagermittel angeordnet ist,**
wobei das erste und zweite Mobilteil (1) auf einer Verfahrfläche verfahren werden,
wobei jedes Mobilteil (1) eine als Hubachse (20) fungierende Linearachse und eine Steuerung sowie jeweilige von einem Elektromotor angetriebene Räder aufweist,
wobei das Transportgestell (4) in einem ersten Bereich des Transportgestells (4) vom ersten Mobilteil (1) unterfahren wird,
wobei das Transportgestell (4) in einem anderen, also zweiten, Bereich des Transportgestells (4) vom zweiten Mobilteil (1) unterfahren wird,
wobei durch **vertikales** Ausfahren der Hubachsen (20) der Mobilteile (1) das Transportgestell (4) derart angehoben wird, dass das Lagermittel des Transportgestells (4) den Berührkontakt zur Verfahrfläche verliert,
wobei ein Kommunikationskanal zwischen dem ersten und dem zweiten Mobilteil (1) vorgesehen ist,
wobei der Kommunikationskanal zwischen den beiden Mobilteilen (1) und unterhalb des Transportgestells (4) angeordnet ist, nämlich zwischen Verfahrfläche und Transportgestell (4) angeordnet ist,
**wobei der Antrieb der Mobilteile mittels einer Master-Slave-Regelung geregelt wird,**
**indem** eines der Mobilteile (1) als Master und das andere als Slave fungiert,
so dass eine Verbundfahrt ausgeführt wird,
wobei die Hubachsen ebenfalls in Master-Slave-Regelung betrieben werden,
wobei von dem als Master fungierenden Mobilteil (1) erfassten Istwerte der Vertikalposition seiner Hubachse (20) über den Kommunikationskanal an das als Slave fungierende Mobilteil (1) übertragen werden und daraus ein jeweils aktueller Sollwert bestimmt wird, auf den die Vertikalposition der Hubachse (20) des als Slave fungierenden Mobilteils (1) hin geregelt wird,
so, dass das Transportgestell (4) von den beiden Hubachsen gleichmäßig angehoben wird,
wobei die Master-Slave-Regelung der Hubachsen (20) und der Antriebe der Mobilteile (1) zeitlich überlappend betrieben werden,
**dadurch gekennzeichnet, dass**
**der Kommunikationskanal als optischer oder infrarotoptischer Kommunikationskanal ausgeführt ist, und**
im als Master fungierenden Mobilteil (1) ein jeweils, **von der zu transportierenden Last und der Neigung der Verfahrfläche abhängiges,** aktuell notwendiges Drehmoment bestimmt wird,
wobei ein erster Anteil dieses Drehmoments als Sollwert für eine im als Master fungierenden Mobilteil (1) angeordnete Drehmomentenregelung verwendet wird, so dass das vom Antrieb des als Master fungierenden Mobilteils (1) erzeugte Drehmoment auf diesen Sollwert hin geregelt wird,
wobei der restliche Anteil des jeweils aktuell als notwendig bestimmten Drehmoments als Sollwert für eine im als Slave fungierenden Mobilteil (1) angeordnete Drehmomentenregelung verwendet wird, so dass das vom Antrieb des als Slave fungierenden Mobilteils (1) erzeugte Drehmoment auf diesen Sollwert hin geregelt wird,
wobei die notwendigerweise für die Durchführung der Regelung der Antriebe der Mobilteile (1) zu übertragenden Daten über den Kommunikationskanal im gleichen Zeitabschnitt wie die für die Durchführung der Regelung der **Hub**achsen notwendigerweise zu übertragenden Daten übertragen werden.

2. Transportsystem
aufweisend ein erstes Mobilteil (1) und ein zweites Mobilteil (1) sowie ein Transportgestell (4),
wobei am Transportgestell (4) ein Lagermittel angeordnet ist,
wobei das Lagermittel als Lagerrollen ausgeführt ist, welche zum Verfahren des Transportgestells auf einer Verfahrfläche angeordnet sind,
wobei jedes Mobilteil (1) eine als Hubachse (20) fungierende Linearachse und eine Steuerung sowie jeweilige von einem Elektromotor angetriebene Räder aufweist,
wobei ein optischer oder infrarotoptischer Kommunikationskanal zwischen dem ersten und dem zweiten Mobilteil (1) vorgesehen ist,
wobei der Kommunikationskanal zwischen den beiden Mobilteilen (1) und unterhalb des Transportgestells (4) angeordnet ist, nämlich zwischen Verfahrfläche und Transportgestell (4) angeordnet ist,
**dadurch gekennzeichnet dass**
das Transportsystem zur Durchführung des Verfahrens nach Anspruch 1 konfiguriert ist.

3. Transportsystem
aufweisend ein erstes Mobilteil (1) und ein zweites Mobilteil (1) sowie ein Transportgestell (4),
wobei am Transportgestell (4) ein Lagermittel angeordnet ist,
wobei das Lagermittel als Standfüsse ausgeführt sind, mit welchen das Transportgestell (4) auf der Verfahrfläche abstellbar ist,
wobei jedes Mobilteil (1) eine als Hubachse (20) fungierende Linearachse und eine Steuerung sowie jeweilige von einem Elektromotor angetriebene Räder aufweist,
wobei ein optischer oder infrarotoptischer Kommunikationskanal zwischen dem ersten und dem zweiten Mobilteil (1) vorgesehen ist,
wobei der Kommunikationskanal zwischen den beiden Mobilteilen (1) und unterhalb des Transportgestells (4) angeordnet ist, nämlich zwischen Verfahrfläche und Transportgestell (4) angeordnet ist,
**dadurch gekennzeichnet dass**
das Transportsystem zur Durchführung des Verfahrens nach Anspruch 1 konfiguriert ist. Z

4. Transportsystem nach Anspruch 2 oder 3,
**dadurch gekennzeichnet, dass**
das erste Mobilteil (1) den Abstand zu dem zweiten Mobilteil (1) überwacht
und/oder dass
das zweite Mobilteil (1) den Abstand zu dem ersten Mobilteil (1) überwacht.

5. Transportsystem nach mindestens einem der Ansprüche 2-4,
**dadurch gekennzeichnet, dass**
Räder beider Mobilteile (1) lenkbar sind,
also eine am jeweiligen Mobilteil (1) angeordnet Radaufnahmeeinheit drehbar gelagert ist an einem Gestell des Mobilteils (1), wobei die Drehachse parallel zur Normalenrichtung der Verfahrfläche im Berührpunkt der Räder mit der Verfahrfläche ausgerichtet ist.

## Claims

1. Method for operating a transport system comprising a first and a second mobile part (1) and comprising a transport frame (4),
wherein a bearing means is arranged on the transport frame (4),
wherein the first and the second mobile part (1) are moved on a travel surface,
wherein each mobile part (1) has a linear shaft acting as a lifting shaft (20), a controller and respective wheels driven by an electric motor,
wherein the first mobile part (1) crosses below the transport frame (4) in a first region of the transport frame (4),
wherein the second mobile part (1) crosses below the transport frame (4) in a different, i.e. second, region of the transport frame (4),
wherein, by vertically extending the lifting shafts (20) of the mobile parts (1), the transport frame (5) is raised in such a way that the bearing means of the transport frame (4) loses contact with the travel surface,
wherein a communications channel is provided between the first and the second mobile part (1),
wherein the communications channel is arranged between the two mobile parts (1) and below the transport frame (4), specifically between the travel surface and the transport frame (4),
wherein the drive of the mobile parts is controlled by means of a master-slave control by one of the mobile parts (1) acting as the master and the other as the slave such that linked travel is executed,
wherein the lifting shafts are likewise operated in master-slave control,
wherein actual values, detected by the mobile part (1) acting as the master, for the vertical position of the lifting shaft (20) thereof are transmitted via the communications channel to the mobile part (1) acting as the slave, and a respective current setpoint is determined therefrom, towards which the vertical position of the lifting shaft (20) of the mobile part (1) acting as the slave is controlled such that the transport frame (4) is raised by the two lifting shafts uniformly,
wherein the master-slave control of the lifting shafts (20) and of the drives of the mobile parts (1) is operated in a manner overlapping in time,
**characterised in that**
the communications channel is configured as an optical or infrared-optical communications channel, and
a currently required torque, which is dependent on the respective load to be transported and the slope of the travel surface, is determined in the mobile part (1) acting as the master, wherein a first component of said torque is used as a setpoint for a torque control unit arranged in the mobile part (1) acting as the master, such that the torque generated by the drive of the mobile part (1) acting as the master is controlled towards said setpoint,
wherein the remaining component of the torque determined as being currently required is used as a setpoint for a torque control unit arranged in the mobile part (1) acting as the slave, such that the torque generated by the drive of the mobile part (1) acting as the slave is controlled towards said setpoint,
wherein the data required to be transmitted in order to control the drives of the mobile parts (1) are transmitted via the communications channel in the same time segment as the data required to be transmitted in order to control the lifting shafts.

2. Transport system
comprising a first mobile part (1) and a second mobile part (1) and a transport frame (4),
wherein a bearing means is arranged on the transport frame (4),
wherein the bearing means is configured as bearing rollers, which are arranged in order to move the transport frame on a travel surface,
wherein each mobile part (1) has a linear shaft acting as a lifting shaft (20), a controller and respective wheels driven by an electric motor,
wherein an optical or infrared-optical communications channel is provided between the first and the second mobile part (1),
wherein the communications channel is arranged between the two mobile parts (1) and below the transport frame (4), specifically between the travel surface and the transport frame (4),
**characterised in that**
the transport system is configured to carry out the method according to claim 1.

3. Transport system
comprising a first mobile part (1) and a second mobile part (1) and a transport frame (4),
wherein a bearing means is arranged on the transport frame (4),
wherein the bearing means is configured as supporting stands by which the transport frame (4) can be set down on the travel surface,
wherein each mobile part (1) has a linear shaft acting as a lifting shaft (20), a controller and respective wheels driven by an electric motor,
wherein an optical or infrared-optical communications channel is provided between the first and the second mobile part (1),
wherein the communications channel is arranged between the two mobile parts (1) and below the transport frame (4), specifically between the travel surface and the transport frame (4),
**characterised in that**
the transport system is configured to carry out the method according to claim 1.

4. Transport system according to either claim 2 or claim 3,
**characterised in that**
the first mobile part (1) monitors the distance from the second mobile part (1) and/or **in that**
the second mobile part (1) monitors the distance from the first mobile part (1).

5. Transport system according to at least one of claims 2-4,
**characterised in that**
wheels of both mobile parts (1) are steerable,
a wheel-holding unit arranged on each mobile part (1) is thus rotatably mounted on a frame of the mobile part (1), wherein the axis of rotation extends in parallel with the normal direction of the travel surface at the contact point between the wheels and the travel surface.

## Revendications

1. Procédé d'actionnement d'un système de transport comprenant des première et seconde parties mobiles (1), ainsi qu'un châssis de transport (4),
un moyen de support étant implanté sur ledit châssis de transport (4),
lesdites première et seconde parties mobiles (1) étant déplacées sur une surface de déplacement,
sachant que chaque partie mobile (1) inclut un axe linéaire remplissant la fonction d'un axe de levage (20), et une commande, ainsi que des roues respectives entraînées par un moteur électrique,
la première partie mobile (1) étant déplacée au-dessous du châssis de transport (4) dans une première région dudit châssis de transport (4),
la seconde partie mobile (1) étant déplacée au-dessous dudit châssis de transport (4) dans une autre région, c'est-à-dire une seconde région dudit châssis de transport (4),
sachant que, sous l'effet d'un déploiement vertical des axes de levage (20) desdites parties mobiles (1), le châssis de transport (4) est soulevé de manière à supprimer le contact du moyen de support dudit châssis de transport (4) par rapport à la surface de déplacement, un canal de communication étant prévu entre lesdites première et seconde parties mobiles (1),
lequel canal de communication est interposé entre les deux parties mobiles (1) et est situé au-dessous du châssis de transport (4), plus précisément interposé entre la surface de déplacement et ledit châssis de transport (4),
l'entraînement desdites parties mobiles étant régulé au moyen d'une régulation du type élément dominant-élément dominé,
du fait que l'une desdites parties mobiles (1) remplit la fonction d'élément dominant, et l'autre partie la fonction d'élément dominé,
en vue de l'exécution d'un déplacement combiné,
les axes de levage étant pareillement actionnés en mode régulation du type élément dominant-élément dominé,
sachant que des valeurs réelles détectées par la partie mobile (1) agissant comme l'élément dominant, relatives à l'emplacement vertical occupé par son axe de levage (20), sont transmises à la partie mobile (1) agissant comme l'élément dominé, par l'intermédiaire du canal de communication, ce qui constitue une base de détermination d'une valeur de consigne respective à l'instant considéré, vers laquelle tend une régulation de l'emplacement vertical occupé par ledit axe de levage (20) de ladite partie mobile (1) agissant comme l'élément dominé,
de telle sorte que le châssis de transport (4) soit soulevé uniformément par les deux axes de levage,
la régulation des axes de levage (20) et des entraînements des parties mobiles (1), du type élément dominant-élément dominé, étant actionnée avec chevauchement dans le temps, **caractérisé par le fait que**
le canal de communication est réalisé sous la forme d'un canal de communication optique, ou optique fonctionnant aux infrarouges, et
un couple de rotation nécessaire à l'instant considéré, dépendant respectivement de la charge à transporter et de l'inclinaison de la surface de déplacement, est déterminé dans la partie mobile (1) agissant comme l'élément dominant,
une première part constitutive de ce couple de rotation étant utilisée en tant que valeur de consigne pour une régulation de couples de rotation intégrée dans la partie mobile (1) agissant comme l'élément dominant, de façon telle que le couple de rotation, engendré par l'entraînement de ladite partie mobile (1) agissant comme l'élément dominant, soit régulé pour tendre vers cette valeur de consigne,
la part constitutive restante du couple de rotation déterminé comme étant respectivement nécessaire, à l'instant considéré, étant utilisée en tant que valeur de consigne pour une régulation de couples de rotation intégrée dans la partie mobile (1) agissant comme l'élément dominé, de façon telle que le couple de rotation, engendré par l'entraînement de ladite partie mobile (1) agissant comme l'élément dominé, soit régulé pour tendre vers cette valeur de consigne,
sachant que les données devant être nécessairement transmises en vue de l'exécution de la régulation des entraînements des parties mobiles (1) sont fournies, par l'intermédiaire du canal de communication, en concomitance avec les données devant être nécessairement transmises en vue de l'exécution de la régulation des axes de levage.

2. Système de transport
comprenant une première partie mobile (1) et une seconde partie mobile (1), ainsi qu'un châssis de transport (4),
un moyen de support étant implanté sur ledit châssis de transport (4),
lequel moyen de support est réalisé sous la forme de roulettes de support installées en vue du déplacement dudit châssis de transport sur une surface de déplacement,
chaque partie mobile (1) incluant un axe linéaire remplissant la fonction d'un axe de levage (20), et une commande, ainsi que des roues respectives entraînées par un moteur électrique,
un canal de communication optique, ou optique fonctionnant aux infrarouges, étant prévu entre lesdites première et seconde parties mobiles (1),
ledit canal de communication étant interposé entre les deux parties mobiles (1) et situé au-dessous du châssis de transport (4), plus précisément interposé entre la surface de déplacement et ledit châssis de transport (4),
**caractérisé par le fait que**
ledit système de transport est configuré en vue de la mise en œuvre du procédé conforme à la revendication 1.

3. Système de transport
comprenant une première partie mobile (1) et une seconde partie mobile (1), ainsi qu'un châssis de transport (4),
un moyen de support étant implanté sur ledit châssis de transport (4),
lequel moyen de support est réalisé sous la forme de piètements d'assise par lesquels ledit châssis de transport (4) peut être posé sur la surface de déplacement,
chaque partie mobile (1) incluant un axe linéaire remplissant la fonction d'un axe de levage (20), et une commande, ainsi que des roues respectives entraînées par un moteur électrique,
un canal de communication optique, ou optique fonctionnant aux infrarouges, étant prévu entre lesdites première et seconde parties mobiles (1),
ledit canal de communication étant interposé entre les deux parties mobiles (1) et situé au-dessous du châssis de transport (4), plus précisément interposé entre la surface de déplacement et ledit châssis de transport (4),
**caractérisé par le fait que**
ledit système de transport est configuré en vue de la mise en œuvre du procédé conforme à la revendication 1.

4. Système de transport selon la revendication 2 ou 3,
**caractérisé par le fait que**
la première partie mobile (1) surveille la distance par rapport à la seconde partie mobile (1) ;
et/ou **par le fait que**
ladite seconde partie mobile (1) surveille la distance par rapport à ladite première partie mobile (1).

5. Système de transport selon au moins l'une des revendications 2-4,
**caractérisé par le fait que**
des roues des deux parties mobiles (1) sont aptes au braquage,
c'est-à-dire qu'une unité de réception des roues, implantée sur la partie mobile (1) respective, est montée à rotation sur un bâti de ladite partie mobile (1), l'axe de rotation étant parallèle à la direction de la normale à la surface de déplacement au point de contact des roues avec ladite surface de déplacement.
